# EUROPÄISCHE PATENTSCHRIFT

(11) **EP 2 656 026 B1**
(45) Veröffentlichungstag und Bekanntmachung des Hinweises auf die Patenterteilung: **04.04.2018**
(21) Anmeldenummer: 11804953.5
(22) Anmeldetag: 09.12.2011
(51) Int. Cl.: G01G 19/414

(54) **VERFAHREN ZUM BETRIEB EINER LADENWAAGE**
METHOD FOR OPERATING A RETAIL SCALE
PROCÉDÉ POUR LE FONCTIONNEMENT D'UNE BALANCE DE CHARGEMENT

(30) Priorität: 21.12.2010 DE 102010055418
(43) Veröffentlichungstag der Anmeldung: 30.10.2013
(73) Patentinhaber: Bizerba SE & Co. KG, 72336 Balingen (DE)
(72) Erfinder: LEU, Martin, 72336 Balingen (DE)
(74) Vertreter: Huber, Meik
(86) Internationale Anmeldenummer: PCT/EP2011/006223
(87) Internationale Veröffentlichungsnummer: WO 2012/084138

(56) Entgegenhaltungen:
- DE-A1-102008 009 115
- DE-A1-102009 030 585
- US-B1- 6 779 722
- Wikipedia: "Barcode reader", Internet , 10. Dezember 2010 (2010-12-10), XP002672402, Gefunden im Internet: URL:http://en.wikipedia.org/w/index.php?ti tle=Barcode_reader&oldid=401694217 [gefunden am 2012-03-27]
- Wikipedia: "Staring array", , 21. November 2010 (2010-11-21), XP002672405, Gefunden im Internet: URL:http://en.wikipedia.org/w/index.php?ti tle=Staring_array&oldid=398052648 [gefunden am 2012-03-27]

## Beschreibung

Die Erfindung betrifft ein Verfahren zum Betrieb einer Ladenwaage gemäß den Merkmalen des Oberbegriffs des Anspruchs 1.

Aus der EP 2 138 810 A2 ist eine Ladenwaage bekannt, die eine Kamera aufweist um einen Bediener der Ladenwaage automatisch zu identifizieren.

Ferner sind aus der Praxis sogenannte Checkoutwaagen bekannt. Dies sind Waagen, die an ein Kassensystem angeschlossen sind und einen separaten Laserscanner zum Lesen von Barcodes aufweisen.

Der Erfindung liegt die Aufgabe zugrunde, ein Verfahren zum Betrieb einer Ladenwaage zu schaffen, welches eine einfache und ergonomische Bedienung ermöglicht und insbesondere Buchungsvorgänge der Ladenwaage vereinfacht.

Es wird erfindungsgemäß vorgeschlagen, dass bei einem Buchungsvorgang die Bedienerkennung automatisch über eine Kamera erfolgt und das Kamerabild auf das Vorhandensein eines Barcodes durchsucht wird, dessen Daten decodiert und mit der Bedienerkennung verknüpft werden. Die durch Barcode codierten Daten können beispielsweise Informationen zu einem Produkt, Informationen zu dessen Inhaltsstoffen oder auch Gewichtsinformationen oder Preisinformationen sein. Bei einem Buchungsvorgang einer Ladenwaage müssen die Bedienerkennung, sowie möglicherweise noch mehrere Artikeldaten eingegeben werden. Von Vorteil ist, wenn manuelle Eingaben weitestgehend reduziert und diese Daten automatisch erfasst werden. Dies verringert mögliche, auf Falscheingaben basierende Fehlerquellen. Es erleichtert den Bedienablauf und beschleunigt den Buchungsvorgang.

Bei Ladenwaagen handelt es sich in der Praxis oft um Hardwareplattformen mit begrenzter Rechenleistung im Vergleich zu einem herkömmlichen Personal Computer. Daher ist es von Vorteil, wenn der Aufwand an zu erbringender Rechenleistung möglichst verringert wird. Bildverarbeitende Verfahren sind per se sehr rechenaufwändig und belasten daher die Hardware einer Ladenwaage überdurchschnittlich.

Von Vorteil ist es daher, wenn die Bilderkennung nicht bei jedem Buchungsvorgang immer durchlaufen werden muss. Daher ist vorgesehen, dass zu einem Buchungsvorgang die Suche und Decodierung eines Barcodes abhängig von einer Bedienerkennung erfolgt. Wenn eine Bedienerkennung vorhanden ist, wird direkt die Suche und Decodierung eines Barcodes ausgeführt. Die Bedienerkennung kann dabei beispielsweise bereits in vorhergehenden Buchungen durch automatische Verfahren wie die Bilderkennung ermittelt worden sein oder auch manuell eingegeben worden sein.

Sofern für einen Buchungsvorgang keine Bedienerkennung vorhanden ist, wird zuerst die Bilderkennung durchgeführt.

Dies hat den Vorteil, dass jeder Buchungsvorgang sicher einem Bediener zuzuordnen ist.

Typischerweise findet ein Buchungsvorgang so statt, dass ein Bediener einen zu erkennenden Barcode vor sich in Richtung der Ladenwaage hält. Dies bedeutet, dass für die Erkennung des Barcodes ein anderer Abstand zu einer Kamera besteht, als bei der Bedieneridentifikation. Es ist daher in einer Ausführung vorgesehen, dass der Schärfebereich der Kamera abhängig von dem Erkennungsmodus gesteuert wird. Insbesondere wird zum Erkennen eines Barcodes die Kamera auf eine geringere Entfernung scharfgestellt als zum Erkennen eines Bedieners.

Der Barcode kann direkt auf einem Produkt aufgedruckt sein oder zum Beispiel als Etikett auf dem Produkt aufgeklebt werden. Es ist vorgesehen, dass die Ladenwaage einen Drucker zum Drucken von Selbstklebeetiketten aufweist und solche Barcodes selbst druckt. Dabei codiert die Ladenwaage buchungsrelevante Daten eines Produkts in entsprechende Barcodes, die bei einem späteren Buchungsvorgang verwendet werden sollen. Dieses Verfahren kann z. B. bei vorverpackter Ware angewandt werden.

Als Barcode können entweder eindimensionale Barcodes, wie z. B. die bekannten Strichcodes oder EAN-COdes verwendet werden. Es ist auch vorgesehen zweidimensionale Barcodes wie z. B. QR-Code oder DataMatrix zu verwenden.

In einer Ausführung kann vorgesehen sein, dass die aus einem Barcode decodierten Daten direkt für eine Buchung verwendet werden. Das heißt, dass die auf dem Barcode codierten Daten per Bilderkennung decodiert und zu dem Buchungsvorgang hinzugefügt werden.

Ebenso kann vorgesehen sein, dass anhand der aus einem Barcode detektierten Daten entsprechende Buchungsdaten aus einer Produktdatenbank selektiert werden. Das bedeutet, dass in dem Barcode Daten codiert sind, die als Selektionskriterium oder als Adresse dienen um aus einer Produktdatenbank oder einem Warenwirtschaftsprogramm weitere Daten zu selektieren und diese dann dem Buchungsvorgang zuzufügen. So kann beispielsweise ein Produktpreis in einer zentralen Datenbank eines Warenwirtschaftssystems zentral gepflegt werden. Eine Preisänderung führt dann nicht zwangsläufig zu einer neuen Etikettierung des Produkts.

Es ist vorgesehen, dass das erfindungsgemäße Verfahren in einer Ladenwaage, beispielsweise in deren Steuergerät implementiert ist. Es kann als Ablauffähige Software oder als hardwarecodiertes Verfahren, beispielsweise durch programmierbare Bausteine, implementiert sein. Es ist jedoch auch vorgesehen, dass die Ladenwaage über eine Schnittstelle, beispielsweise eine LAN-Schnittstelle, an ein Netzwerk angeschlossen ist, und einzelne Verfahrensschritte wie zum Beispiel die Bilderkennung oder Decodierung der Barcodes als Dienste in das Netzwerk bzw. an einen in dem Netzwerk vorhandenen Server auslagert. Dies kann den notwendigen Rechenaufwand in der Ladenwaage reduzieren und den Ablauf des Verfahrens beschleunigen.

Weitere Ausführungsbeispiele der Erfindung sind in der Figur dargestellt und der dazugehörenden Beschreibung beschrieben.

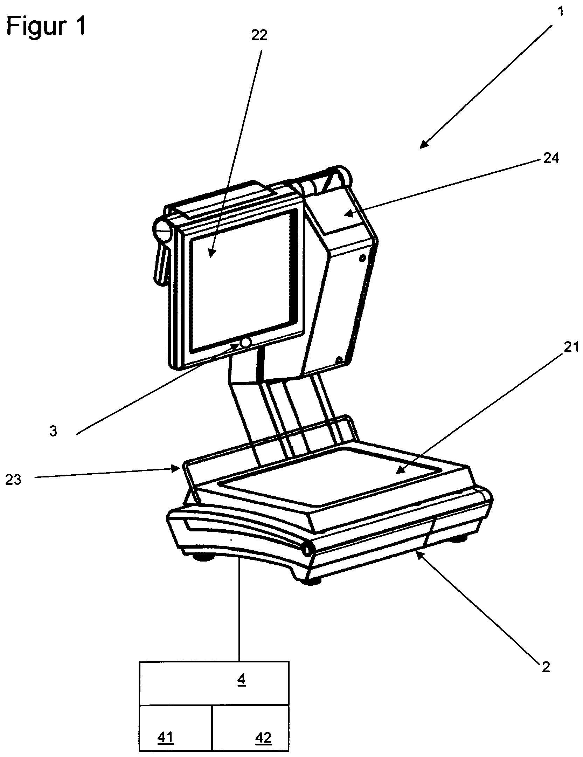

Die **Figur 1** zeigt Ladenwaage 1 mit einem Gehäuse 2, welches eine Last- bzw. Wiegeplatte 21 aufweist. Das Gehäuse 2 ist an seiner Unterseite über Füße auf einer ebenen Fläche, z. B. einer Verkaufstheke, abstellbar. Die Füße sind in der Höhe verstellbar, um zu gewährleisten, dass die Waage 1 auch bei unebenem Untergrund immer genau horizontal ausgerichtet ist. In dem Gehäuse 2 ist ein nicht dargestellter Gewichtsensor zum Erfassen des Gewichts eines auf die Lastplatte 21 aufgelegten Gegenstandes, also des Wiegeguts, angeordnet.

Das Gehäuse 2 weist zudem einen Drucker 24 zum Drucken von Etiketten und ein Display 22 auf. Das Display 22 ist als Touch-Screen ausgebildet und dient sowohl zur Anzeige als auch zur Eingabe von Daten. Eine Steuerungsvorrichtung 4 steuert die Waage und ist mit einem Personendatenspeicher 41 und einem Verkaufsspeicher 42 verbunden.

Die Steuerungsvorrichtung 4 und die Speicher, Personendatenspeicher 41, Verkaufsspeicher 42 und sind in der Figur schematisch dargestellt. Sie können innerhalb einer Waage integriert angeordnet sein, oder aber separat z. B. in einem räumlich entfernt von den Waagen angeordneten Server installiert sein. Die Speicher 41, 42 können jeweils als physikalisch getrennte lesbare und beschreibbare Speicher ausgebildet sein. Sie können jedoch auch auf einem physikalischen Speicher als unterschiedliche Speicherbereiche realisiert werden. Die Verbindung der Steuervorrichtung 4 mit den Speichern 41, 42 und der Waage 1 ist über digitale Kommunikationsschnittstellen realisiert, die in der Figur 1 als Leitungen skizziert sind.

Im oberen Bereich des Gehäuses 2 ist unterhalb des Displays 22 eine Kamera 3 angeordnet. Das Gesichtsfeld der Kamera 3 ist auf einen Bediener hin, also auf den Bereich vor der Waage hin ausgerichtet. Die Kamera 3 nimmt ein Bild des Gesichtsfelds auf, welches digitalisiert und einer geometrischen Mustererkennung unterzogen wird, um einen Code zu erkennen. Bei der Mustererkennung werden aus dem Bild Erkennungsmerkmale extrahiert, die mit den in dem Personendatenspeicher 41 gespeicherten Codes verglichen werden. Anhand der besten Übereinstimmung wird der passende Bediener automatisch selektiert.

Die Steuerungsvorrichtung 4 verknüpft diese Bedieneridentität automatisch mit den Daten für einen Buchungsvorgang, beispielsweise den Gewichtsdaten. Weiter durchsucht die Steuerungsvorrichtung das über die Kamera 3 aufgenommene Bild nach einem Barcode ab. Wenn ein Bediener ein Produkt mit einem Barcode in den Erfassungsbereich der Kamera hält, wird die Kamera 3 das Bild des Barcodes aufnehmen und das Steuergerät 4 kann anhand dieser Bildinformationen den Barcode decodieren. Diese decodierten Daten werden dann von dem Steuergerät 4 mit dem Buchungsvorgang verknüpft. Entweder indem die Daten direkt verwendet werden, oder indem anhand dieser Daten weiter Daten aus einer Datenbank selektiert und diese dem Buchungsvorgang zugeführt werden.

Dann legt das Steuergerät bei einer Bestätigung des Buchungsvorganges die verknüpften Daten automatisch als ein Buchungsvorgang in dem Verkaufsspeicher 42 ab.

Danach können weitere Bediener die Waage bedienen oder weitere Wiegevorgänge des gleichen Bedieners folgen. Wenn derselbe Bediener weitere Buchungsvorgänge vornimmt, bleibt die Bedienerkennung gleich, so dass das Steuergerät 4 nicht zu jedem Buchungsvorgang eine rechenaufwändige Bedieneridentifikation starten muss.

Am Ende eines Verkaufsvorganges wird dieser über eine Eingabe des Bedieners abgeschlossen. Die Steuerungsvorrichtung 4 liest dann alle zu dem Bediener gehörenden Daten aus dem Verkaufsspeicher 42 und druckt über den Drucker 26 eine Rechnung aus. Die ausgedruckten Verkaufsdaten werden dabei aus dem Verkaufsspeicher 42 gelöscht.

Neue Bediener werden angelegt, indem beispielsweise die Daten, vorzugsweise der Namen eines neuen Bedieners, manuell an der Waage eingegeben und in dem Personenspeicher abgespeichert werden. Zusätzlich kann über die Kamera 3 ein Bild des Bedieners aufgenommen und in dem Personendatenspeicher 41 gespeichert werden.

Neue Barcodes zum Auszeichnen von Produkten werden erzeugt, indem zum Beispiel in einem Supermarkt Frischeprodukte vorab verpackt und gewogen werden. Diese Daten werden dann anschließend zusammen mit der eindeutigen PLU-Nummer des Produkts von dem Steuergerät in einen Barcode gewandelt und über den Drucker 24 auf einem Etikett ausgedruckt. Dieses Etikett kann dann auf dem Produkt angebracht werden. Bei einem zeitlich nachfolgenden Verkauf des Produkts, muss dieses dann nicht mehr gewogen, sondern nur noch das Etikett mit dem Barcode in das Gesichtsfeld der Kamera gehalten werden, um einen Buchungsvorgang vorzunehmen.

## Patentansprüche

1. Verfahren zum Betrieb einer Ladenwaage mit einer Kamera, wobei bei einem Buchungsvorgang ein Gewichtswert von Wiegegut oder ein manuell eingegebenes Datum automatisch mit einer Bedienerkennung verknüpft wird, wobei die Bedienerkennung durch Bilderkennung automatisch aus dem Kamerabild ermittelt wird,
**dadurch gekennzeichnet,**
**dass** bei einem Buchungsvorgang bei vorhandener Bedienerkennung direkt eine Suche und Decodierung eines Barcodes ausgeführt wird, indem das Kamerabild auf das Vorhandensein eines auf einem zu verkaufenden Produkt aufgedruckten oder als Etikett aufgeklebten Barcodes durchsucht wird, dessen Daten decodiert und mit der Bedienerkennung verknüpft werden.

2. Verfahren nach Anspruch 1,
**dadurch gekennzeichnet,**
**dass** bei einem Buchungsvorgang bei vorhandener Bedienerkennung die Suche nach einem Barcode vor dem Ermitteln von Bedienerdaten durchgeführt wird.

3. Verfahren nach Anspruch 1 oder 2,
**dadurch gekennzeichnet,**
**dass** bei einem Buchungsvorgang ohne vorhandene Bedienerkennung die Suche nach einem Barcode nach dem Ermitteln von Bedienerdaten durchgeführt wird.

4. Verfahren nach einem der Ansprüche 1 bis 3,
**dadurch gekennzeichnet,**
**dass** der Schärfebereich der Kamera zum Suchen nach einem Barcode auf eine nähere Entfernung und zum Ermitteln von Bedienerdaten auf eine weitere Entfernung justiert wird.

5. Verfahren nach einem der vorhergehenden Ansprüche,
**dadurch gekennzeichnet,**
**dass** als Barcode eindimensionale Barcodes oder zweidimensionale Barcodes verwendet werden.

6. Verfahren nach einem der vorhergehenden Ansprüche,
**dadurch gekennzeichnet,**
**dass** aus einem Barcode decodierte Daten direkt für eine Buchung verwendet werden, oder dass anhand der aus einem Barcode detektierten Daten entsprechende Buchungsdaten aus einer Produktdatenbank selektiert werden.

7. Ladenwaage mit einer Lastplatte (21) zum Erfassen des Gewichts von Wiegegut, einem Display (22) zum Anzeigen von Gewichtswerten, einer Kamera (3) zur automatischen Bedienererkennung und einem mit der Lastplatte, dem Display und der Kamera verbundenem Steuergerät (4), welches ein Steuerverfahren nach einem der vorhergehenden Ansprüche durchführt.

## Claims

1. Method for operating retail scales having a camera, wherein, during a logging process, a weight value of goods to be weighed or a manually input data item is automatically linked to an operator ID, wherein the operator ID is automatically determined from the camera image by means of image recognition,
**characterized**
**in that**, during a logging process with an available operator ID, a barcode is directly searched for and decoded by searching the camera image for the presence of a barcode which has been printed on a product to be sold or has been adhesively bonded as a label and the data of which are decoded and linked to the operator ID.

2. Method according to Claim 1,
**characterized**
**in that**, during a logging process with an available operator ID, a barcode is searched for before operator data are determined.

3. Method according to Claim 1 or 2,
**characterized**
**in that**, during a logging process without an available operator ID, a barcode is searched for after operator data have been determined.

4. Method according to one of Claims 1 to 3,
**characterized**
**in that** the focusing range of the camera is adjusted to a closer distance for searching for a barcode and is adjusted to a further distance for determining operator data.

5. Method according to one of the preceding claims,
**characterized**
**in that** one-dimensional barcodes or two-dimensional barcodes are used as the barcode.

6. Method according to one of the preceding claims,
**characterized**
**in that** data decoded from a barcode are used directly for logging, or in that corresponding logging data are selected from a product database on the basis of the data detected from a barcode.

7. Retail scales having a load plate (21) for capturing the weight of goods to be weighed, a display (22) for displaying weight values, a camera (3) for automatically identifying the operator and a control device (4) which is connected to the load plate, to the display and to the camera and carries out a control method according to one of the preceding claims.

## Revendications

1. Procédé pour la mise en fonctionnement d'une balance de chargement comportant une caméra, dans lequel lors d'un processus de comptabilisation, une valeur de poids d'articles à peser ou une donnée saisie manuellement est automatiquement combinée à un identifiant d'opérateur, dans lequel l'identifiant d'opérateur est déterminé automatiquement par reconnaissance d'image à partir de l'image de la caméra,
**caractérisé en ce que**, lors d'un processus de comptabilisation et en présence d'un identifiant d'opérateur, une recherche et un décodage d'un code à barres est directement effectuée en parcourant l'image de la caméra pour déterminer la présence d'un code à barres imprimé ou collé sous forme d'étiquette, sur un produit à vendre, dont les données sont décodées et combinées à l'identifiant d'opérateur.

2. Procédé selon la revendication 1,
**caractérisé en ce que**, lors d'un processus de comptabilisation, et lors de la présence d'un identifiant d'opérateur, la recherche d'un code à barres est effectuée avant la détermination de données d'opérateur.

3. Procédé selon la revendication 1 ou 2,
**caractérisé en ce que**, lors d'un processus de comptabilisation sans présence d'identifiant d'opérateur, la recherche d'un code à barres est effectuée après la détermination de données d'opérateur.

4. Procédé selon l'une des revendications 1 à 3,
**caractérisé en ce que** la plage de netteté de la caméra est ajustée sur une faible distance pour la recherche d'un code à barres et sur une plus grande distance pour la détermination de données d'opérateur.

5. Procédé selon l'une des revendications précédentes,
**caractérisé en ce qu'**un code à barres monodimensionnel ou un code à barres bidimensionnel est utilisé en tant que code à barres.

6. Procédé selon l'une des revendications précédentes,
**caractérisé en ce que** des données décodées à partir d'un code à barres sont directement utilisées pour une comptabilisation ou **en ce que**, sur la base des données détectées à partir d'un code à barres, des données de comptabilisation correspondantes sont sélectionnées dans une base de données de produits.

7. Balance de chargement comportant une plaque de chargement (21) destinée à détecter le poids de produits à peser, un afficheur (22) destiné à afficher des valeurs de poids, une caméra (3) destinée à identifier automatiquement un opérateur, et un appareil de commande (4) relié à la plaque de chargement, à l'afficheur et à la caméra, qui met en oeuvre un procédé selon l'une des revendications précédentes.
